(19) **Europäisches Patentamt European Patent Office Office européen des brevets**

(11) **EP 1 797 396 B1**

(12) **FASCICULE DE BREVET EUROPEEN**

(45) Date de publication et mention de la délivrance du brevet:
**16.03.2011 Bulletin 2011/11**

(21) Numéro de dépôt: **05801598.3**

(22) Date de dépôt: **06.10.2005**

(51) Int Cl.:
***G01C 19/66*** *(2006.01)*

(86) Numéro de dépôt international:
**PCT/EP2005/055035**

(87) Numéro de publication internationale:
**WO 2006/037795 (13.04.2006 Gazette 2006/15)**

(54) **GYROLASER A ETAT SOLIDE A FACTEUR D'ECHELLE STABILISE**

SKALENFAKTORSTABILISIERTER FESTKÖRPER-LASERKREISEL

SCALE-FACTOR STABILISED SOLID-STATE LASER GYROSCOPE

(84) Etats contractants désignés:
**DE GB**

(30) Priorité: **08.10.2004 FR 0410659**

(43) Date de publication de la demande:
**20.06.2007 Bulletin 2007/25**

(73) Titulaire: **THALES, @**
**92200 NEUILLY SUR SEINE (FR)**

(72) Inventeurs:
• **FEUGNET, Gilles**
  **F-91940 LES ULIS (FR)**
• **SCHWARTZ, Sylvain**
  **F-75012 PARIS (FR)**
• **POCHOLLE, Jean-Paul**
  **F-91290 LA NORVILLE (FR)**
• **LARAT, Christian**
  **F-75006 PARIS (FR)**
• **GUTTY, François**
  **F-86100 CHATELLERAULT (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 550 623    FR-A- 2 562 342**
**FR-A- 2 825 463    US-A- 5 241 555**

**Description**

Le domaine de l'invention est celui des gyrolasers à état solide, utilisés pour la mesure des vitesses de rotation ou des positions angulaires. Ce type d'équipement est notamment employé pour les applications aéronautiques.

Le gyrolaser, mis au point il y a une trentaine d'années, est largement commercialisé et utilisé de nos jours. Son principe de fonctionnement est fondé sur l'effet Sagnac, qui induit une différence de fréquence $\Omega$ entre les deux modes optiques d'émission se propageant en sens opposés, dits contre-propageants, d'une cavité laser en anneau bidirectionnelle animée d'un mouvement de rotation. Classiquement, la différence de fréquence $\Omega$ vérifie :

$$\Omega = S.\varpi$$

avec S = 4A/$\lambda$.L
où S est appelé le facteur d'échelle du gyrolaser. L et A sont respectivement la longueur optique et l'aire de la cavités, est la longueur d'onde moyenne d'émission laser hors effet Sagnac et $\underline{\omega}$ est la vitesse de rotation angulaire du gyrolaser.

La mesure de $\Omega$ obtenue par analyse spectrale du battement des deux faisceaux émis permet de connaître la valeur de $\underline{\omega}$ avec une très grande précision.

Par le comptage électronique des franges du battement qui défilent pendant un changement de position angulaire, on détermine aussi la valeur relative de la position angulaire du dispositif.

Un des facteurs déterminant les performances d'un gyrolaser est la stabilité en température de son facteur d'échelle S.

Dans les lasers à gaz de type Hélium/Néon comportant une cavité laser et un milieu amplificateur constitué par un mélange gazeux d'hélium et de néon, la stabilité du facteur d'échelle en température est due à la stabilité conjointe de la longueur d'onde, de la longueur optique et de l'aire de la cavité. La stabilité de l'aire de la cavité est obtenue en utilisant des supports de cavité taillés dans des matériaux à très faible coefficient de dilatation comme le zérodur. La stabilité de la longueur d'onde du laser est entraînée par la stabilité de la longueur d'onde d'émission atomique. La longueur optique de la cavité dépend des variations de la longueur et de l'indice optique de la cavité avec la température. Sa stabilité est assurée par un asservissement de la longueur de la cavité sur la raie atomique utilisée. L'asservissement est réalisé au moyen d'une cale piézo-électrique, le signal d'erreur étant fourni par l'intensité de la lumière émise par le laser.

Le caractère gazeux du milieu amplificateur est toutefois une source de complications techniques lors de la réalisation du gyrolaser, notamment en raison de la grande pureté de gaz requise. D'autre part, il entraîne une usure prématurée du laser, usure due en particulier aux fuites de gaz, aux détériorations des électrodes, aux hautes tensions utilisées pour établir l'inversion de population.

Actuellement, il est possible de réaliser un gyrolaser à état solide fonctionnant dans le visible ou le proche infra-rouge en utilisant, par exemple, un milieu amplificateur à base de cristaux de YAG (Yttrium-Aluminium-Grenat) dopé au Néodyme à la place du mélange gazeux HéliumNéon, le pompage optique étant alors assuré par des diodes laser fonctionnant dans le proche infra-rouge. On peut également utiliser comme milieu amplificateur un matériau semi-conducteur, une matrice cristalline ou un verre dopé avec des ions appartenant à la classe des terres rares (Erbium, Ytterbium...). On supprime ainsi, de facto, tous les problèmes inhérents à l'état gazeux du milieu amplificateur.

Cependant, dans les lasers dont le milieu amplificateur n'est plus un gaz mais un solide, la stabilité du facteur d'échelle ne peut être assurée par les méthodes utilisées pour les lasers à gaz.

En effet, la fréquence du maximum de la courbe de gain du milieu amplificateur est soumise à d'importantes variations lorsque la température varie. Par exemple, pour un laser de type Néodyme/YAG, la variation de la fréquence vaut -1.3 GigaHertz/degré à la longueur d'onde de 1.06 micron dans une gamme de température comprise entre -50 degrés et +100 degrés Celsius.

On sait que l'intervalle spectral libre d'une cavité laser correspond à l'intervalle spectral séparant deux fréquences susceptibles d'osciller dans la cavité. Il vaut c/L, c étant la vitesse de la lumière dans le vide. Or, pour des cavités de dimension classique, c'est-à-dire pour des longueurs optiques L valant quelques dizaines de centimètres, et pour les lasers à état solide, la largeur spectrale de la courbe de gain est grande devant l'intervalle spectral libre. Typiquement, la largeur spectrale de la courbe de gain représente plusieurs dizaines d'intervalles spectraux libres. Dans ces conditions, il n'est plus possible de construire un asservissement de la longueur de la cavité ayant pour signal d'erreur les variations de la courbe de gain lorsque la longueur L varie, celles-ci n'étant plus significatives.

De plus, les variations en température de la longueur optique sont beaucoup plus importantes dans les solides que dans les gaz. En effet, aux variations de longueur géométrique dues à la température, s'ajoutent les variations de l'indice optique qui sont bien plus importantes dans un milieu dense. Par conséquent, il est plus difficile des les compenser à l'aide d'une cale piézo-électrique standard.

Afin d'éviter d'avoir à effectuer la compensation thermique du facteur d'échelle, on pourrait utiliser des capteurs thermiques disposés sur la cavité laser pour déterminer la température, puis, grâce à un modèle mathématique, en déduire la variation du facteur d'échelle correspondant à la température mesurée. On pourrait alors introduire cette variation dans le calcul de la vitesse de rotation angulaire. Cependant, l'expérience prouve que les modèles ne sont pas actuellement suffisamment précis pour obtenir la précision souhaitée.

Dans le domaine des lasers à état solide, le brevet américain US 6614818 propose une architecture optique permettant de conserver le mode d'émission sans saut de mode au moyen d'une compensation globale des dérives thermiques. Cette architecture est fondée sur la conservation du numéro de mode émis $n$, donné par :

$$n \approx \frac{\nu L}{c}$$ avec $\nu$: fréquence du maximum de la courbe de gain du milieu amplificateur utilisé dans le laser et $L$ :

longueur optique de la cavité.

Pour conserver ce numéro de mode, il suffit que sa variation en fonction de la température soit nulle, ce qui se traduit par la relation mathématique suivante :

$$\frac{1}{\nu} \cdot \frac{d\nu}{dT} + \frac{1}{L} \cdot \frac{dL}{dT} = 0$$

Cette relation ne saurait s'appliquer en l'état pour compenser les variations du facteur d'échelle, qui est un problème différent de la conservation de la fréquence du mode d'émission. En particulier, il est possible d'avoir des sauts de modes d'émission tout en conservant le facteur d'échelle.

Le document FR 2 825 463 A décrit un gyrolaser à état solide comprenant une cavité en anneau, dans lequel un matériau de cavité à très faible coefficient de dilatation thermique est utilisé pour minimiser les variations en température des paramètres de la cavité.

Le document FR 2 550 623 A décrit un gyroscope à fibre optique dans lequel une compensation en température du facteur d'échelle optique est proposée. Un moyen de compensation en température impose à la fibre bobinée un coefficient de dilatation thermique voisin ou similaire à celui de l'indice de réfraction de la fibre. Cette compensation est basée sur une relation obtenue par annulation de la dérivée du facteur d'échelle par rapport à la température.

La présente invention propose une architecture optique basée sur la conservation globale du facteur d'échelle, chaque paramètre pouvant varier avec la température.

Plus précisément, l'invention a pour objet un gyrolaser comprenant au moins une cavité en anneau de longueur optique L et d'aire A, un milieu amplificateur à l'état solide agencés de façon que deux ondes optiques de longueur d'onde moyenne λ puissent se propager en sens contraire à l'intérieur de la cavité, le facteur d'échelle S du gyrolaser étant égal à $\frac{4.A}{\lambda.L}$, caractérisé en ce que les variations de la longueur d'onde moyenne λ, de la surface de l'aire A et de la longueur optique L de la cavité en fonction de la température T soient telles que le facteur d'échelle S reste sensiblement constant lorsque la température T varie.

Avantageusement, la cavité ayant un périmètre géométrique $L_o$, ladite cavité comportant au moins un élément optique i, i étant un indice entier variant entre 1 et le nombre total d'éléments optiques, l'élément optique i étant de longueur $L_i$, d'indice optique $n_i$, $x_i$ étant égal au rapport $\frac{L_i}{L_o}$, $\frac{dn_i}{dT}$ étant le coefficient de variation en fonction de la température T de l'indice optique $n_i$ de l'élément optique i, $\alpha_i$ étant le coefficient de dilatation linéaire de l'élément optique i, $\alpha_0$ étant le coefficient de dilatation linéaire du matériau servant de support à la cavité, ν étant la fréquence centrale d'émission du milieu amplificateur et $\frac{d\nu}{dT}$ étant le coefficient de variation en fonction de la température T de ladite fréquence, lesdits éléments optiques et le milieu amplificateur sont agencés de sorte que la relation suivante soit sensiblement vérifiée :

$$\left(2\alpha_0 + \frac{1}{\nu}\cdot\frac{d\nu}{dT}\right)\left[1 + \sum_i (n_i - 1)x_i\right] - \alpha_0 - \sum_i (n_i - 1)x_i\alpha_i - \sum_i \frac{dn_i}{dT}x_i = 0$$

Avantageusement, afin d'éviter que des sauts de modes optiques se produisent, les éléments optiques et le milieu amplificateur sont agencés de sorte que les relations suivantes soient sensiblement et simultanément vérifiées :

$$\alpha_0 = -\frac{1}{\nu}\cdot\frac{d\nu}{dT}$$

et

$$\sum_i \left[\frac{dn_i}{dT} - (n_i - 1)\cdot(\alpha_0 - \alpha_i)\right]x_i = 0$$

Enfin, la cavité peut comporter au moins un matériau dont le coefficient de variation de l'indice optique en fonction de la température T est négatif. Egalement, la cavité peut comporter un ou plusieurs capteurs thermiques et le gyrolaser peut comporter une unité de traitement électronique reliée aux dits capteurs thermiques permettant de calculer les variations résiduelles en fonction de la température du facteur d'échelle.

L'invention concerne aussi un système de mesure angulaire ou de vitesse angulaire, comportant au moins un gyrolaser tel que décrit précédemment. Le système peut alors comporter trois gyrolasers dont les cavités sont orientées de façon à réaliser des mesures dans trois directions indépendantes.

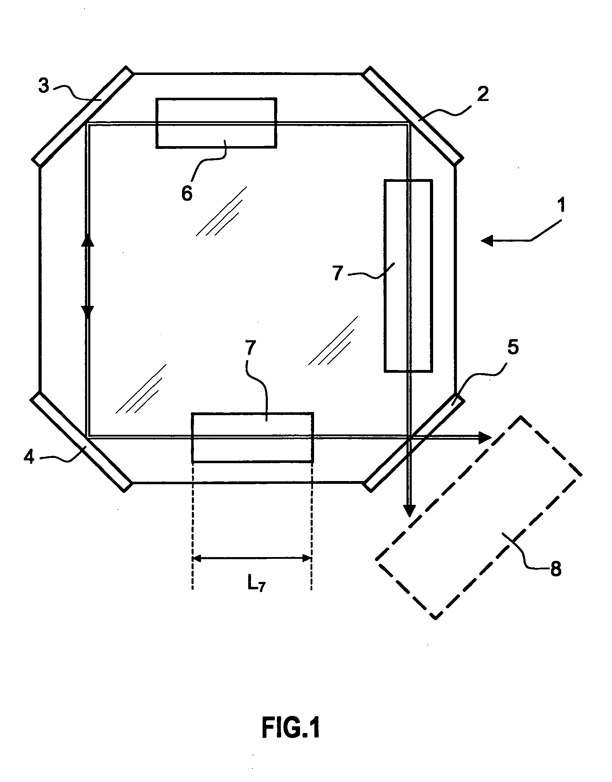

L'invention sera mieux comprise et d'autres avantages apparaîtront à la lecture de la description qui va suivre donnée à titre non limitatif et grâce à la figure 1 annexée qui représente un schéma de principe d'un gyrolaser selon l'invention.

La figure 1 représente le schéma de principe d'un gyrolaser selon l'invention. Il comprend :

• une cavité 1 réalisé dans un premier matériau et comprenant plusieurs miroirs de renvoi 2, 3 et 4 et un miroir partiellement réfléchissant 5 ;
• un milieu amplificateur 6 ;
• au moins un élément optique 7 de longueur $L_7$ ;
• l'ensemble étant agencé de sorte que deux ondes optiques puissent se propager dans deux directions opposées à l'intérieur de la cavité. Ces deux ondes sont représentées par un trait double sur la figure 1. Ces ondes traversent les différents éléments optiques disposés dans la cavité ;
• et un dispositif de mesure opto-électronique 8 représenté en pointillés permettant de calculer le paramètre angulaire mesuré à partir de la figure d'interférence des deux ondes contre-propageantes issues du miroir partiellement réfléchissant 5.

Comme il a été dit, le facteur d'échelle du gyrolaser S vérifie avec les mêmes notations que précédemment :
S = 4A/λ.L

Il est possible de remplacer la longueur d'onde λ par la fréquence ν associée. On obtient alors la nouvelle expression du facteur d'échelle S qui vaut alors :

$$S = \frac{4A\nu}{c.L}$$

On appelle facteur de forme le coefficient H qui vaut:

$$H = \frac{A}{L_o^2}$$ avec $L_o$ périmètre géométrique de la cavité

H est un paramètre sans dimension sensiblement indépendant de la température. Ceci est vérifié notamment si les contraintes extérieures subies par la cavité respectent les symétries de celle-ci. On remplace alors A par $HL_0^2$ dans l'expression de S. On obtient :

$$S = \frac{4H L_0^2 . \nu}{c L}$$

La cavité comporte n éléments optiques indicés i, i étant un indice entier variant entre 1 et le nombre total n d'éléments optiques, chaque élément optique i étant de longueur $L_i$ et d'indice optique $n_i$. Par conséquent, on a la relation :

$$L = L_O + \sum_i (n_i - 1) L_i$$

On écrit alors la nouvelle expression du facteur d'échelle S :

$$S = \frac{4H L_0^2 . \nu}{c \left( L_O + \sum_i (n_i - 1) L_i \right)}$$

La condition de stabilité du facteur d'échelle en fonction de la température s'écrit :

$$\frac{dS}{dT} = 0 \, ,$$

soit encore

$$\left( 2L_0 \frac{dL_0}{dT} \nu + L_0^2 \frac{d\nu}{dT} \right) \left[ L_0 + \sum_i (n_i - 1) L_i \right] - L_0^2 \nu \left( \frac{dL_0}{dT} + \sum_i (n_i - 1) \frac{dL_i}{dT} + \sum_i \frac{dn_i}{dT} . L_i \right) = 0$$

ce qui donne, après division par $\nu . L_0^3$.

$$\left( \frac{2}{L_0} \frac{dL_0}{dT} + \frac{1}{\nu} \frac{d\nu}{dT} \right) \left[ 1 + \sum_i (n_i - 1) \frac{L_i}{L_0} \right] - \frac{1}{L_0} \frac{dL_0}{dT} - \sum_i \frac{n_i - 1}{L_0} \frac{dL_i}{dT} - \sum_i \frac{dn_i}{dT} \frac{L_i}{L_0} = 0$$

En posant $x_i = \dfrac{L_i}{L_0}$, on obtient :

$$\left( \frac{2}{L_0} \frac{dL_0}{dT} + \frac{1}{\nu} \frac{d\nu}{dT} \right) \left[ 1 + \sum_i (n_i - 1) x_i \right] - \frac{1}{L_0} \frac{dL_0}{dT} - \sum_i \frac{(n_i - 1) x_i}{L_i} \frac{dL_i}{dT} - \sum_i \frac{dn_i}{dT} x_i = 0$$

Les coefficients de dilatation des différents éléments optiques valent : $\alpha_i = \dfrac{1}{L_i}\dfrac{dL_i}{dT}$. En les introduisant dans l'expression précédente, on obtient :

$$\left(2\alpha_0 + \frac{1}{\nu}\frac{d\nu}{dT}\right)\left[1 + \sum_i (n_i - 1)x_i\right] - \alpha_0 - \sum_i (n_i - 1)x_i\alpha_i - \sum_i \frac{dn_i}{dT}x_i = 0$$

Ce qui est bien l'expression telle que revendiquée et que l'on appelle relation 1.

Dans le cas simple où la cavité ne comporte qu'un seul élément optique, qui sert de milieu amplificateur, ledit élément ayant un indice optique n, une longueur totale L et un coefficient de dilatation $\alpha$, alors la relation précédente s'écrit :

$$\left(2\alpha_0 + \frac{1}{\nu}\frac{d\nu}{dT}\right)[1 + (n - 1)x] - \alpha_0 - (n - 1)\alpha x - \frac{dn}{dT}x = 0$$

Dans ce cas, $x$ vaut donc:

$$x = \frac{\alpha_0 + \dfrac{1}{\nu}\dfrac{d\nu}{dT}}{\dfrac{dn}{dT} + (n - 1)\left(\alpha - 2\alpha_0 - \dfrac{1}{\nu}\dfrac{d\nu}{dT}\right)}$$

A titre d'exemple, si le milieu amplificateur est du néodyme-YAG travaillant à la longueur d'onde de 1.06 micron, alors

- l'indice optique n est égal à 1.82 ;
- le coefficient de dilatation linéaire $\alpha$ est égal à 7.6 ppm par degré, ppm signifiant partie par million;
- le coefficient de variation de l'indice optique en fonction de la température est égal à 7.3 ppm par degré ;
- le coefficient de variation de la fréquence $\dfrac{1}{\nu}\dfrac{d\nu}{dT}$ est égal à -4.6 ppm par degré,
- et x représente le pourcentage de milieu amplificateur présent dans la cavité.

Dans ce cas, x est égal à :

$$x = \frac{\alpha_0 - 4.6}{17.3 - 1.64\alpha_0}$$

x doit être compris entre 0 et 1. Par conséquent, il suffit que le coefficient de dilatation du matériau $\alpha_0$ vérifie:

4.6 ppm.K$^{-1}$ < $\alpha_0$ .< 8.3 ppm.K$^{-1}$ pour qu'il soit possible de trouver une longueur adaptée de néodyme-YAG permettant de rendre le facteur d'échelle quasiment indépendant de la température.

La relation 1 précédente permet de conserver un facteur d'échelle constant. Pour certaines applications, il peut se révéler intéressant d'éviter de perturber le fonctionnement du gyrolaser par des sauts de mode et de conserver un numéro de mode émis indépendant de la température, ce qui se traduit par la relation mathématique suivante :

$$\frac{1}{v}\cdot\frac{dv}{dT}+\frac{1}{L}\cdot\frac{dL}{dT}=0$$

En utilisant les mêmes notations que précédemment, cette relation s'écrit encore :

$$\left[L_0+\sum_i (n_i-1)L_i\right]\frac{1}{v}\frac{dv}{dT}+\frac{dL_0}{dT}+\sum_i\frac{dn_i}{dT}L_i+\sum_i (n_i-1)\frac{dL_i}{dT}=0$$

qui devient, après division par $L_0$

$$\left[1+\sum_i (n_i-1)x_i\right]\frac{1}{v}\frac{dv}{dT}+\alpha_0+\sum_i\frac{dn_i}{dT}x_i+\sum_i (n_i-1)x_i\alpha_i=0$$

On appelle relation 2 cette dernière relation.

Les conditions pour que les relations 1 et 2 soient vérifiées simultanément sont :

$$\begin{cases}\alpha_0=-\frac{1}{v}\cdot\frac{dv}{dT}\\[2mm]\sum_i\left[\frac{dn_i}{dT}-(n_i-1)(\alpha_0-\alpha_i)\right]x_i=0\end{cases}$$

On appelle ces conditions relations 3 et 4.

Si la cavité ne comporte qu'un seul élément optique, les relations 3 et 4 précédentes ne sont pas nécessairement possibles à satisfaire. Si la cavité comporte au moins deux éléments optiques, il devient plus aisé de satisfaire simultanément ces deux relations. En effet, avec deux éléments optiques, les relations 3 et 4 s'écrivent :

$$\begin{cases}\alpha_0=-\frac{1}{v}\cdot\frac{dv}{dT}\\[2mm]\left[\frac{dn_1}{dT}-(n_1-1)(\alpha_0-\alpha_1)\right]x_1+\left[\frac{dn_2}{dT}-(n_2-1)(\alpha_0-\alpha_2)\right]x_2=0\end{cases}$$

A titre d'exemple, si le matériau 1 est du Nd:YAG servant de milieu amplificateur, les conditions 3 et 4 deviennent :

$$\begin{cases}\alpha_0=4.6\,ppm.K^{-1}\\[2mm]9.76x_1+\left[\frac{dn_2}{dT}-(n_2-1)(\alpha_0-\alpha_2)\right]x_2=0\end{cases}$$

Il est possible de trouver un matériau vérifiant la condition 3. En effet, ce coefficient de dilatation est typique des verres standards de type borosilicate.

$x_1$ et $x_2$ étant nécessairement positifs, la relation 4 implique que :

$$\frac{dn_2}{dT} - (n_2 - 1)(4.6 - \alpha_2) < 0$$

Cette condition peut être remplie pour certains verres. A titre d'exemple non limitatif, les caractéristiques du verre de référence PK51A de la société SCHOTT sont:

$\alpha_2 = 12.7\,\text{ppm.K}^{-1}$
$dn_2/dT = -7\,\text{ppm.K}^{-1}$
$n_2 = 1.5$

Et, par conséquent, $\frac{dn_2}{dT} - (n_2 - 1)(4.6 - \alpha_2) = -3\,ppm.K^{-1}$ , vérifiant ainsi la condition précédente.

Avec ce verre de référence PK51A, la relation 4 s'écrit alors :

$$9.76.x_1 - 3.x_2 = 0$$

soit encore $x_1/x_2 = 0.3$

Par exemple, si le barreau de YAG assurant l'amplification a une longueur de 5 centimètres, alors un barreau de PK51A de 16 centimètres permet d'assurer la compensation thermique, la cavité étant elle-même réalisée dans un matériau dont le coefficient de dilatation vaut 4.6 ppm.K$^{-1}$ qui est typiquement représentatif d'un verre.

Ainsi, un choix judicieux de matériaux permet de compenser en grande partie les dérives thermiques agissant sur le facteur d'échelle et également sur les modes optiques.

Bien entendu, dans le cas où les coefficients de dilatation ou les coefficients de variation de l'indice optique en fonction de la température ne sont pas parfaitement linéaires, dans le cas également où la température n'est pas uniformément répartie dans l'enceinte de la cavité, il est possible d'affiner la mesure du facteur d'échelle du gyrolaser au moyen d'un modèle mathématique déterminant les petites variations du facteur d'échelle en fonction des variations thermiques. Dans ce cas, des capteurs de température sont disposés dans l'enceinte de la cavité.

Le gyrolaser selon l'invention peut s'appliquer à tout système de mesure angulaire ou de vitesse angulaire. Le système peut comporter, en particulier, trois gyrolasers dont les cavités sont orientées de façon à réaliser des mesures dans trois directions différentes, permettant ainsi de connaître les trois composantes angulaires d'une position ou d'une vitesse.

**Revendications**

1. Gyrolaser comprenant au moins une cavité en anneau (1) de longueur optique L et d'aire A, un milieu amplificateur à l'état solide (6) agencés de façon que deux ondes optiques de longueur d'onde moyenne λ puissent se propager en sens contraire à l'intérieur de la cavité, le facteur d'échelle S du gyrolaser étant égal à $\frac{4.A}{\lambda.L}$, la cavité ayant un périmètre géométrique $L_o$, ladite cavité comportant au moins un élément optique (7) traversé par les ondes optiques, i étant un indice entier variant entre 1 et le nombre total d'éléments optiques, l'élément optique i étant de longueur $L_i$, d'indice optique $n_i$, $x_i$ étant égal au rapport $\frac{L_i}{L_O}$, $\frac{dn_i}{dT}$ étant le coefficient de variation en fonction de la température T de l'indice optique $n_i$ de l'élément optique i, $\alpha_i$ étant le coefficient de dilatation linéaire de l'élément optique i, $\alpha_0$ étant le coefficient de dilatation linéaire du matériau composant la cavité, ν étant la fréquence centrale d'émission du milieu amplificateur (6) et $\frac{d\nu}{dT}$ étant le coefficient de variation en fonction de la température T de ladite fréquence, **caractérisé en ce que** les lesdits éléments optiques (7) et le milieu amplificateur (6) sont agencés de sorte que les relations suivantes soient sensiblement et simultanément vérifiées :

$$\alpha_0 = -\frac{1}{\nu}\cdot\frac{d\nu}{dT} \text{ et } \sum_i \left[\frac{dn_i}{dT} - (n_i - 1)(\alpha_0 - \alpha_i)\right]x_i = 0$$

**2.** Gyrolaser selon la revendication 1, **caractérisé en ce que** la cavité (1) comporte au moins un matériau dont le coefficient de variation de l'indice optique en fonction de la température T est négatif.

**3.** Gyrolaser selon l'une des revendications précédentes, **caractérisé en ce que** la cavité (1) comporte au moins un capteur thermique et le gyrolaser comporte une unité de traitement électronique associée reliée audit capteur thermique permettant de calculer les variations résiduelles en fonction de la température du facteur d'échelle S.

**4.** Système de mesure angulaire ou de vitesse angulaire, **caractérisé en ce qu'**il comporte au moins un gyrolaser selon l'une des revendications précédentes.

**5.** Système de mesure selon la revendication 4, **caractérisé en ce qu'**il comporte trois gyrolasers dont les cavités sont orientées de façon à réaliser des mesures dans trois directions différentes.

**Claims**

**1.** A gyrolaser comprising at least one ring cavity (1) of optical length L and area A, a solid state amplifier medium (6) arranged so that two optical waves of medium wavelength $\lambda$ can propagate in opposite directions inside the cavity, the scale factor S of the gyrolaser being equal to $\frac{4.A}{\lambda.L}$, the cavity having a geometric perimeter $L_o$, said cavity comprising at least one optical element (7) traversed by the optical waves, i being an integer index varying between 1 and the total number of optical elements, the optical element i being of length $L_i$ and of optical index $n_i$, $x_i$ being equal to the ratio $\frac{L_i}{L_o}$, $\frac{dn_i}{dT}$ being the coefficient of variation as a function of the temperature T of the optical index $n_i$ of the optical element i, $\alpha_i$ being the linear dilatation coefficient of the optical element i, $\alpha_o$ being the linear dilatation coefficient of the component material of the cavity, $\nu$ being the central emission frequency of the amplifying medium (6) and $\frac{d\nu}{dT}$ being the coefficient of variation as a function of the temperature T of said frequency, **characterised in that** said optical elements (7) and the amplifying medium (6) are arranged so that the following relations are essentially and simultaneously verified:

$$\alpha_0 = -\frac{1}{\nu}\cdot\frac{d\nu}{dT} \text{ and } \sum_i \left[\frac{dn_i}{dT} - (n_i - 1)(\alpha_0 - \alpha_i)\right]x_i = 0$$

**2.** The gyrolaser according to claim 1, **characterised in that** the cavity (1) comprises at least one material wherein the coefficient of variation of the optical index as a function of the temperature T is negative.

**3.** The gyrolaser according to any one of the previous claims, **characterised in that** the cavity (1) comprises at least one thermal sensor and the gyrolaser comprises an associated electronic processing unit connected to said thermal sensor allowing calculation of the residual variations as a function of the temperature of the scale factor S.

**4.** An angular measurement or angular speed system, **characterised in that** it comprises at least one gyrolaser according to any one of the previous claims.

**5.** The measurement system according to claim 4, **characterised in that** it comprises three gyrolasers the cavities of which are oriented so as to take measurements in three different directions.

**Patentansprüche**

1. Laserkreisel, der Folgendes umfasst: wenigstens einen Ringhohlraum (1) mit optischer Länge L und Fläche A, ein Festkörperverstärkungsmedium (6), das so ausgelegt ist, dass sich zwei optische Wellen von mittlerer Wellenlänge $\lambda$ in entgegengesetzten Richtungen im Innern des Hohlraums ausbreiten können, wobei der Skalenfaktor S des Laserkreisels gleich $\frac{4.A}{\lambda.L}$ ist, wobei der Hohlraum einen geometrischen Umfang $L_o$ hat, wobei der Hohlraum wenigstens ein optisches Element (7) beinhaltet, das von den Lichtwellen durchquert wird, wobei i ein ganzzahliger Index ist, die zwischen 1 und der Gesamtzahl der optischen Elemente variiert, wobei das optische Element i die Länge $L_i$ und den optischen Index $n_i$ hat, wobei $x_i$ gleich dem Verhältnis $\frac{L_i}{L_o}$ wobei $\frac{dn_i}{dT}$ der Variationskoeffizient in Abhängigkeit von der Temperatur T des optischen Indexes $n_i$ des optischen Elements i ist, wobei $\alpha_i$ der lineare Ausdehnungskoeffizient des optischen Elements i ist, wobei $\alpha_o$ der lineare Ausdehnungskoeffizient des Komponentenmaterials des Hohlraums ist, wobei $\nu$ die mittlere Emissionsfrequenz des Verstärkungsmediums (6) ist und wobei $\frac{d\nu}{dT}$ der Variationskoeffizient in Abhängigkeit von der Temperatur T der Frequenz ist, **dadurch gekennzeichnet, dass** die optischen Elemente (7) und das Verstärkungsmedium (6) so ausgelegt sind, dass die folgenden Beziehungen im Wesentlichen und gleichzeitig verifiziert werden:

$$\alpha_0 = -\frac{1}{\nu}\cdot\frac{d\nu}{dT} \quad \text{und} \quad \sum_i \left[ \frac{dn_i}{dT} - (n_i - 1)(\alpha_0 - \alpha_i) \right] x_i = 0$$

2. Laserkreisel nach Anspruch 1, **dadurch gekennzeichnet, dass** der Hohlraum (1) wenigstens ein Material umfasst, bei dem der Variationskoeffizient des optischen Indexes in Abhängigkeit von der Temperatur T negativ ist.

3. Laserkreisel nach einem der vorherigen Ansprüche, **dadurch gekennzeichnet, dass** der Hohlraum (1) wenigstens einen Wärmesensor umfasst und der Laserkreisel eine assoziierte elektronische Verarbeitungseinheit umfasst, die mit dem Wärmesensor verbunden ist und die Berechnung der Restvariationen in Abhängigkeit von der Temperatur des Skalenfaktors S ermöglicht.

4. Winkelmess- oder Winkelgeschwindigkeitssystem, **dadurch gekennzeichnet, dass** es wenigstens einen Laserkreisel nach einem der vorherigen Ansprüche umfasst.

5. Messsystem nach Anspruch 4, **dadurch gekennzeichnet, dass** es drei Laserkreisel umfasst, deren Hohlräume so orientiert sind, dass sie Messungen in drei verschiedenen Richtungen durchführen.

**FIG.1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6614818 B
- FR 2825463 A
- FR 2550623 A